# EUROPEAN PATENT APPLICATION

(11) **EP 4 814 921 A1**
(43) Date of publication of application: **30.09.2026**
(21) Application number: 26156766.3
(22) Date of filing: 06.02.2026
(51) Int. Cl.: G08G 1/0969

(54) **INFORMATION DISPLAY CONTROL SYSTEM AND METHOD OF DISPLAYING INFORMATION**

(30) Priority: 28.03.2025 JP 2025055940
(71) Applicant: MAZDA MOTOR CORPORATION, Hiroshima 730-8670 (JP)
(72) Inventor: Sato, Ryo, Aki-gun, Hiroshima (JP); Moritani, Takayuki, Aki-gun, Hiroshima (JP); Koyama, Takahiro, Aki-gun, Hiroshima (JP); Sakamoto, Yudai, Aki-gun, Hiroshima (JP); Obayashi, Haruki, Aki-gun, Hiroshima (JP)
(74) Representative: Müller-Boré & Partner Patentanwälte PartG mbB

(57) **Abstract**

An information display control system 1 for a vehicle 100 includes: a vehicle exterior camera 11 acquiring image data; a navigation device 12 acquiring positional information and map information; and a control unit 20 displaying speed limit information on a display unit 30, in which the map information includes information on an attribute of a location and information on a speed limit on a travel road, the control unit 20 is configured to execute determination processing to determine whether the sign is an implicit sign on the basis of the positional information and the map information and to display the speed limit information in regard to a location beyond the sign and implicit sign information indicating the attribute of the location on the display unit 30 when the sign is the implicit sign, and, in the determination processing, the control unit 20 determines whether the sign exists near a position at which the speed limit is switched.

## Description

### [Technical Field]

The present invention relates to an information display control system and, in particular, an information display control system that displays speed limit information to a driver who is driving a vehicle. The present invention also relates to a method of displaying information.

### [Background Art]

there has been proposed an apparatus that compares road sign information identified from image information captured by a camera with positional information of a navigation system, or the like by using the image information and navigation information included in the navigation system, and presents information such as a warning, a speed limit, a road sign image, and the like to a driver who is driving a vehicle according to a result of the comparison. For example, such an apparatus is disclosed in JP2002-525712A that compares traffic sign identification data identified by a traffic sign identification device with map data of the navigation system and generates a warning to the driver when there is a deviation between these.

For example, such an apparatus is described in JP2017-215902A that displays, on a sign display unit, a speed restriction sign image identified from imaging data of the camera by using the imaging data and a road sign database. In this apparatus, when the speed restriction sign image is not displayed, the speed limit is estimated by using the positional information of the navigation system, or the like.

Furthermore, in the apparatus described in JP2017-215902A, when the map image data of the navigation system does not include the speed limit information, the speed limit is estimated on the basis of country information and road attribute information, and displays the estimated speed limit information on road sign image display means.

### [Citation List]

JP2002-525712A
JP2017-215902A

### [Summary of Invention]

### [Technical Problem]

In a certain region (such as the EU), an implicit sign is installed at an entrance and an exit of an urban area or the like. The implicit sign is a sign indicating an attribute of a location such as the urban area, an expressway (or motorway), or a residential area, and is a sign that does not have explicit speed restriction information (for example, a sign that only shows a city name). Thus, when the vehicle passes through this implicit sign, the speed limit may change depending on the attribute of the location. In such a case, it is preferred to notify the driver, who is driving the vehicle, of the updated speed limit information and sign information as an update factor, due to passing of the implicit sign.

However, since the implicit sign is not a speed restriction sign and does not show the explicit speed restriction information, the information display control system cannot provide the speed limit information on the basis of the implicit sign. That is, in the conventional information display control system, it is impossible to accurately notify the driver, who is driving the vehicle, of the updated speed limit, which is associated with the implicit sign, and the implicit sign as the update factor of the speed limit.

An object of the invention is to provide an information display control system capable of accurately recognizing an implicit sign and appropriately displaying at least speed restriction information and sign information to a driver.

### [Solution to Problem]

The above-described problem is solved by the invention as defined in independent claims. Embodiments are defined in dependent claims. For example, an information display control system for a vehicle includes: an imaging unit that acquires image data acquired by imaging at least front of the vehicle (or an imaging unit that acquires image data of footage in front of the vehicle); a navigation device that acquires positional information of the vehicle and map information; and a control unit that identifies a sign from the acquired image data, identifies speed limit information from the identified sign, and displays the identified speed limit information on a display unit. The map information includes information on an attribute of a location and information on a speed limit on a travel road. The control unit is configured to execute determination processing to determine whether the sign is an implicit sign (or a specific sign) of the attribute of the location on the basis of the positional information, the map information, and the image data when identifying the sign from the acquired image data and to display the speed limit information in regard to a location beyond the sign and implicit sign information indicating the attribute of the location on the display unit when the sign is the implicit sign of the attribute of the location. In the determination processing, the control unit determines whether the sign exists near the position at which the speed limit is switched.

In the present embodiment configured as described above, when the sign is identified, the implicit sign can be identified without erroneous detection on the basis of the map information, the sign information, and the image data, and it is possible to accurately provide a driver with the speed limit information in regard to the location beyond the sign and the implicit sign information indicating the attribute of the location.

In the present embodiment, for example, the control unit determines that the sign is the implicit sign when the sign is located at a position within a predetermined limit distance from the position at which the speed limit is switched. In the present embodiment configured as described above, it is possible to determine whether the sign identified from the image data is the implicit sign on the basis of a distance from a boundary position.

In the present embodiment, for example, when a plurality of signs are identified, the control unit determines that a sign located closest to the position at which the speed limit is switched is the implicit sign. In the present embodiment configured as described above, it is possible to determine whether the sign identified from the image data is the implicit sign on the basis of the distance from the boundary position.

In the present embodiment, for example, the position at which the speed limit is switched is a position at which the speed limit included in the map information is switched. In the present embodiment configured as described above, it is possible to accurately provide the driver with the speed limit information, which is based on the attribute of the location, and the implicit sign information indicating the attribute of the location when the vehicle passes the implicit sign.

In the map information, the speed limit may be defined in a manner to correspond to an attribute of a location of a travel road. In the present embodiment configured as described above, the speed limit can be acquired from the map information.

In the present embodiment, for example, the control unit includes speed definition data that defines the speed limit information in a manner to correspond to the attribute of the location. In the present embodiment configured as described above, it is possible to acquire the speed limit information from the speed definition data on the basis of the attribute of the location.

In the present embodiment, for example, the control unit excludes a plurality of adjacent signs within a predetermined distance from the determination processing. In the present embodiment configured as described above, when the plurality of signs identified from the image data are adjacent to each other, these signs can be excluded.

In the present embodiment, for example, the control unit acquires position coordinates of the sign identified from the image data, and determines whether a plurality of signs are adjacent within a predetermined distance on the basis of a distance between two each of the position coordinates of the plurality of signs. In the present embodiment configured as described above, it is possible to accurately determine whether the plurality of signs are the implicit signs on the basis of the position coordinates thereof.

In the present embodiment, for example, the implicit sign includes at least one of a sign indicating an entrance to an urban area or an exit from the urban area, a sign indicating an entrance to a residential area or an exit from the residential area, and a sign indicating an entrance or an exit between a general road and an expressway. In the present embodiment configured as described above, the control unit can identify the sign indicating the entrance to the urban area or the exit from the urban area, the sign indicating the entrance to the residential area or the exit from the residential area, and the sign indicating the entrance or the exit between the general road and the expressway. The implicit sign may not be a speed restriction sign and/or may not show the explicit speed restriction information.

A vehicle or an automobile may include the information display control system according to the present invention.

### [Advantageous Effects]

According to the information display control system in the invention, it is possible to accurately recognize the implicit sign and appropriately display at least the speed restriction information and the sign information to the driver.

### [Brief Description of Drawings]

[FIG. 1] FIG. 1 is a block diagram of an information display control system according to an embodiment of the invention.
[FIG. 2] FIG. 2 is a view illustrating traffic sign display control according to the embodiment of the invention.
[FIG. 3] FIG. 3 is a view illustrating a sign display unit in a display unit according to the embodiment of the invention.
[FIG. 4A] FIG. 4A is a view illustrating the traffic sign display control when only an implicit sign is installed according to the embodiment of the invention.
[FIG. 4B] FIG. 4B is a view illustrating the traffic sign display control when a plurality of signs are installed according to the embodiment of the invention.
[FIG. 4C] FIG. 4C is a view illustrating the traffic sign display control when a plurality of signs are installed according to the embodiment of the invention.
[FIG. 5] FIG. 5 is a flowchart of information display control according to the embodiment of the invention.

### [Description of Embodiments]

### [System Configuration]

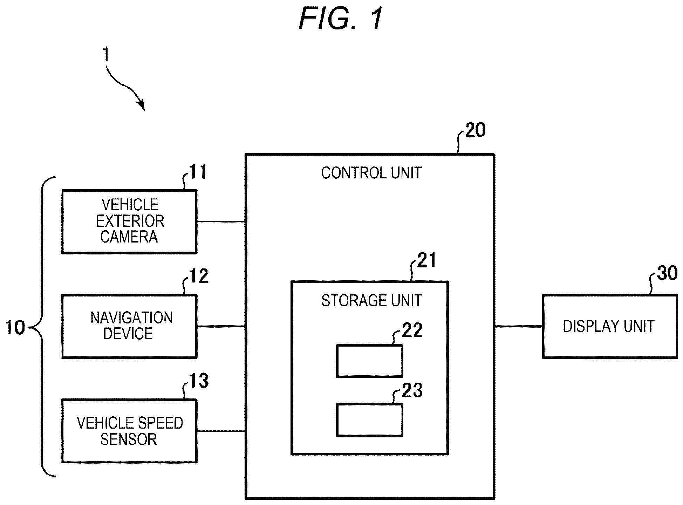

Hereinafter, an information display control system according to an embodiment of the invention will be described with reference to the accompanying drawings. FIG. 1 is a block diagram of an information display control system. An information display control system 1 according to the embodiment of the invention is mounted on a vehicle 100, and is configured to display speed limit information on an in-vehicle display unit 30.

As illustrated in FIG. 1, the information display control system 1 includes a vehicle sensor 10 including one or a plurality of sensors, a control unit 20, and the display unit 30. The vehicle sensor 10 includes a vehicle exterior camera 11 as an imaging unit, a navigation device 12, and optionally, a vehicle speed sensor 13, and the like.

The vehicle exterior camera 11 captures or constantly captures an image of a surrounding environment at least in front of the vehicle and, optionally, on sides of the vehicle 100, and provides acquired image data to the control unit 20. The vehicle speed sensor 13 provides a signal indicating a vehicle speed of the vehicle 100 to the control unit 20.

The navigation device 12 may include a positioning device such as a GPS sensor, and specifies a location of the vehicle 100 on a map with reference to map information stored in a storage unit outside and/or inside the vehicle 100. The map information may include: traffic sign information indicating positions and types (for example, speed limit, stop, no entry of vehicle, and the like) of the traffic signs installed along travel roads; and/or travel road information indicating types (road type, road grade, speed limit) and structures of the travel roads.

The navigation device 12 provides, as navigation information, positional information of the vehicle 100 and the map information (traffic sign information and travel road information) to the control unit 20. Based on the positional information and the map information, the control unit 20 can specify a travel position of the vehicle 100 on the map, the type, the structure, and the speed limit of the travel road, the traffic sign around the vehicle, and the like.

In the speed limit information provided in the travel road information, a general speed limit is determined for each travel road according to an attribute of a location. Examples of the attribute of the location of the travel road include an urban area, a residential area, a suburban road, and an expressway. Thus, the attribute of the location of the travel road is bounded by an entrance to the urban area or an exit from the urban area, an entrance to the residential area or an exit from the residential area. In addition, the attribute of the location of the travel road is bounded by an entrance or an exit between a general road and the expressway.

For example, in the speed limit information defined in the travel road information, the speed limit or a legal speed is defined for the travel route according to the attribute of the location. Thus, in the speed limit information, for example, the legal speed during travel in the urban area after passing the entrance to the urban area is defined as 50 km/h, and the legal speed during travel outside the urban area after passing the exit from the urban area is defined as 100 km/h.

In an example, the legal speed during travel in the residential area after passing the entrance to the residential area is defined as 20 km/h, and the legal speed during travel outside the residential area after passing the exit from the residential area is defined as 50 km/h. In an example, the legal speed during travel on the general road after passing the entrance to the general road is defined as 100 km/h, and the legal speed during travel on the expressway after passing the entrance to the expressway is defined as 130 km/h.

The control unit 20 is a computer device that includes a processor, a storage unit 21 (RAM, ROM, and the like) storing various programs and databases, an input/output device for electrical signals, and the like. Based on a signal received from the vehicle sensor 10, the control unit 20 outputs a display command signal to the display unit 30.

The control unit 20 is configured to specify an implicit sign through image processing on image data of the vehicle exterior camera 11 and to specify the speed limit of the travel road on the basis of the speed limit information in the navigation information. The implicit sign may not be a speed restriction sign and may not show the explicit speed restriction information.

When a speed restriction sign is identified from the image data, the control unit 20 may adapt or preferentially adopt the speed limit defined by the speed restriction sign as the speed limit information. However, when the speed restriction sign is not identified, the control unit 20 can adopt the speed limit specified from the navigation information as the speed limit information. In the case where the implicit sign is identified, the control unit 20 switches display of the display unit 30 as described below when the vehicle 100 passes the implicit sign.

For example, the storage unit 21 stores sign data 22 corresponding to the traffic signs (for example, the speed restriction sign) and the attributes of the locations of the travel roads. The sign data 22 corresponding to the traffic sign is, for example, sign information indicating the traffic signs such as the speed restriction sign and the stop. The sign data 22 corresponding to the attributes of the locations of the travel roads is implicit sign information representing the attributes of the locations of the travel roads e.g., at the entrance to the urban area and/or the exit from the urban area, at the entrance to the residential area and/or the exit from the residential area, and at the entrance and/or the exit between the general road and the expressway.

Similar to the navigation device 12, the storage unit 21 may store speed definition data 23 for defining the legal speed and/or the speed limit according to the attribute of the location of the travel road. In the speed definition data 23, the attribute of the location of the travel road may be, as described above, the urban area, the residential area, or the like, and may be bounded by the entrance to the urban area and/or the exit from the urban area, or by the entrance to the residential area and/or the exit from the residential area.

The attributes of the locations of the travel roads may also include the general road and the expressway, and may be bounded by the entrance and/or the exit therebetween. In addition, the speed limit according to the attribute of the location of the travel road may be the same as the speed limit information defined in the travel road information.

Accordingly, alternatively, the control unit 20 may identify the implicit sign through the image processing on the image data of the vehicle exterior camera 11, specify the attribute of a location of a predetermined position from the navigation information, and estimate the speed limit or the legal speed on the travel road on the basis of the speed definition data 23 from the attribute information of the specified location.

The display unit 30 is provided in the vehicle and may provide information or various types of information to the driver on the basis of the display command signal from the control unit 20. The display unit 30 is, for example, a head-up display (HUD).

### [Overview of Traffic Sign Display Control]

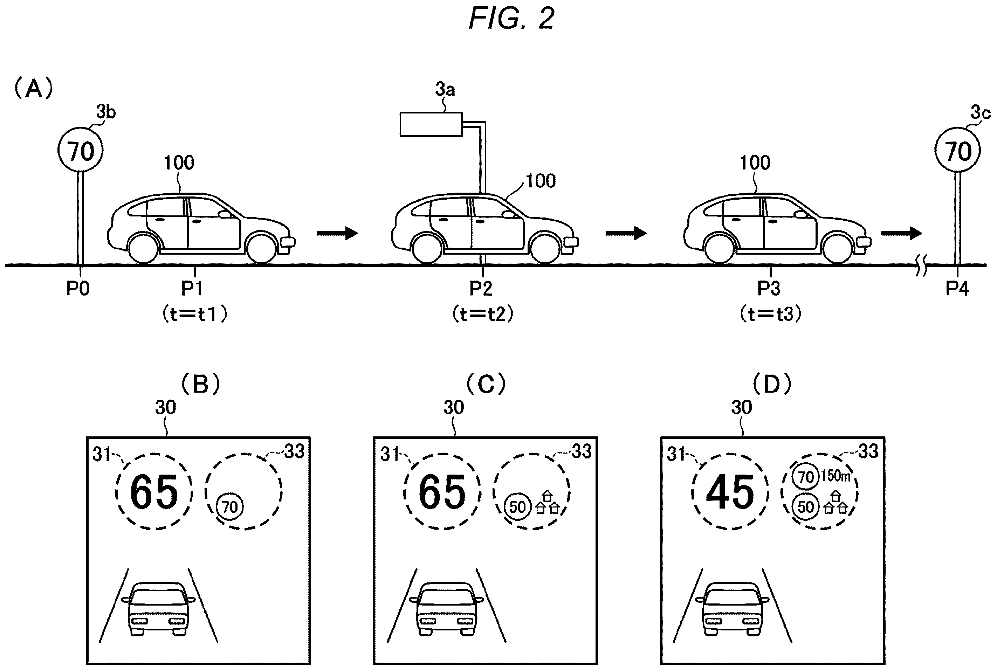

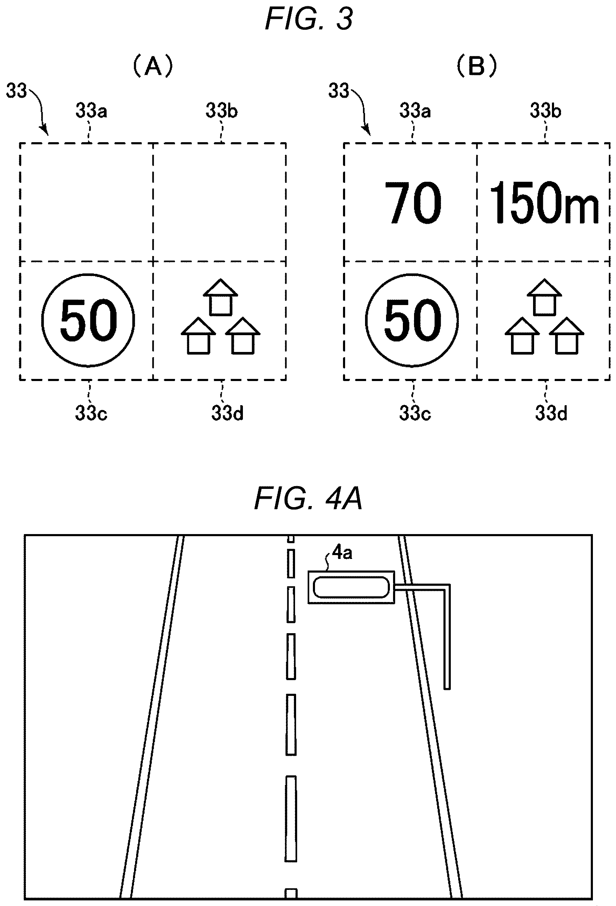

Next, overview of the traffic sign display control according to the present embodiment will be described with reference to FIGs. 2 and 3. FIG. 2A illustrates a situation where the vehicle 100 is traveling on a travel road 2, and FIGs. 2B to 2D illustrate the display unit 30 at positions P1 to P3, respectively. As illustrated in FIG. 2, the display unit 30 may be provided with a vehicle speed display unit 31 that displays a current vehicle speed of the vehicle 100 and a sign display unit 33 that displays the sign information. FIG. 3(A) illustrates the sign display unit 30 at the position P2, and FIG. 3(B) illustrates the sign display unit 30 at the position P3.

The control unit 20 may display the current vehicle speed on the vehicle speed display unit 31 on the basis of the detection signal by the vehicle speed sensor 13. The control unit 20 also displays the sign information on the sign display unit 33 on the basis of the navigation information from the navigation device 12 and the image data from the vehicle exterior camera 11.

For example, as illustrated in FIG. 3, the sign display unit 33 has: a display area 33a in which information on the speed restriction sign located closest to a current position in front of an advancing direction on the travel road 2 ("70" in FIG. 3(B). That is, 70 km/h) is displayed; and a display area 33b in which the distance information ("150 m" in FIG. 3(B)) on a distance from the current position to the speed restriction sign is displayed. The control unit 20 may acquire and display the information on the speed restriction sign located in the vicinity and the distance information, from the navigation information of the navigation device 12.

The sign display unit 33 may further include a display area 33c in which information on an actual speed restriction sign installed along the travel road 2 is displayed. The control unit 20 may identify and display information on the actual speed restriction sign from the image data of the vehicle exterior camera 11. That is, the control unit 20 identifies the traffic signs (including an auxiliary sign) through the image processing on the camera image data, reads, from these, the speed restriction information particularly corresponding to the identified speed restriction sign from the sign data 22 stored in the storage unit 21, and displays it in the display area 33c when passing the identified traffic sign.

As illustrated in FIG. 3(A), for example, in the display area 33c, the speed restriction information ("50" in FIGs. 3(A) and (B). That is, 50 km/h) for each attribute of the location related to the implicit sign installed along the travel road 2 is displayed. The control unit 20 reads and displays the speed restriction information for each attribute of the location from the speed limit information of the navigation device 12. That is, when passing the identified implicit sign after identifying the implicit sign through the image processing on the camera image data, the control unit 20 displays the speed limit information, which is read from the navigation information, in the display area 33c. The read speed limit information may be the speed limit information that corresponds to or is set for the location beyond the implicit sign.

Alternatively, the control unit 20 may identify the implicit sign through the image processing on the camera image data, estimate the speed limit, which is on the basis of the speed definition data 23 stored in the storage unit 21, by using the attribute of the location included in the navigation information (the attribute of the location that corresponds to the location beyond the implicit sign), and display the estimated speed limit (the speed limit information) in the display area 33c when the identified implicit sign is passed.

The sign display unit 33 may further include a display area 33d in which information on the traffic sign (the sign other than the speed restriction sign) installed along the travel road 2. The control unit 20 may identify and display the information on the traffic sign from the image data of the vehicle exterior camera 11. That is, the control unit 20 identifies the traffic signs (including the auxiliary sign) through the image processing on the camera image data, reads, from these, a mark that particularly corresponds to the identified traffic sign from the sign data 22 stored in the storage unit 21, and displays it in the display area 33d according to the identified traffic sign before and/or after the identified traffic sign is passed.

As illustrated in FIG. 3(A), for example, in the display area 33d, the implicit sign information (a pictogram in FIG. 3(A). That is, representing the urban area) for each attribute of the location that is related to the implicit sign installed along the travel road 2 (more specifically, the location beyond the implicit sign) is displayed.

The control unit 20 identifies and displays the implicit sign information for each attribute of the location from the navigation information from the navigation device 12 and the image data of the vehicle exterior camera 11. That is, the control unit 20 identifies the implicit sign through the image processing on the camera image data, reads, from the sign data 22 stored in the storage unit 21, the implicit sign information, which represents the attribute of the identified location, on the basis of the attribute of the location included in the navigation information, and displays it in the display area 33d when the identified implicit sign is passed.

For example, in FIG. 2(A), in a period from time t1 to t3, the vehicle 100 moves from the position P1 (t = t1) to the position P3 (t = t3) through the position P2 (t = t2). It is assumed that a speed restriction sign 3b ("70") is installed at a position P0, that an implicit sign 3a ("the entrance to the urban area or the like") is installed at the position P2 ahead of the position P0, and that a speed restriction sign 3c ("70") is installed at a position P4 ahead of the position P3. Accordingly, the speed limit is 70 km/h in a section from the position P0 to the position P2, a section from the position P2 to the position P4 is a section in which the speed limit is 50 km/h corresponding to or set for the implicit sign, and a section ahead of the position P4 is a section in which the speed limit is 70 km/h.

In this case, as illustrated in FIG. 2(B), at the position P1, "65" (65 km/h) that represents the current vehicle speed is displayed on the vehicle speed display unit 31, the display areas 33a, 33b are blank display, and "70" (70 km/h) that represents the speed limit information identified from the image data of the speed restriction sign 3b installed at the position P0 is displayed in the display area 33c. As illustrated in FIG. 3(A), at the position P2, in order to notify that the vehicle 100 has passed the implicit sign 3a, the display area 33c is switched to "50" (50 km/h) that represents the speed limit information based on the attribute of the location corresponding to the implicit sign 3a, the implicit sign information (for example, the pictogram) that represents the attribute of the location corresponding to the implicit sign is displayed in the display area 33d, and the display areas 33a, 33b remain as the blank display.

As illustrated in FIG. 2(D), at the position P3, the vehicle exterior camera 11 acquires the image data (or footage) in front of the vehicle 100 and identifies the speed restriction sign 3c. Consequently, "45" (45 km/h) that represents the current vehicle speed is displayed on the vehicle speed display unit 31, information "70" (70 km/h in FIG. 3(B)) on the speed restriction sign 3c, which is located closest to the current position and ahead in the advancing direction on the travel road 2, is displayed in the display area 33a, and the distance information ("150 m" in FIG. 3(B)) on the distance from the current position to the speed restriction sign 3c is displayed in the display area 33b.

Furthermore, in the display area 33c, "50" (50 km/h) that represents the speed limit information read from the navigation information (or the speed definition data 23 in the storage unit 21) and the implicit sign information read from the sign data 22 stored in the storage unit 21 are displayed or continuously displayed. The speed limit information and the implicit sign information in the display areas 33c, 33d may be displayed only for a predetermined period (for example, two to three seconds) after the identified sign is passed (or immediately before passing).

### [Traffic Sign Display Control for Implicit Sign]

Next, a description will be made on the traffic sign display control in a case where one or more signs are installed along the travel path 2 in a predetermined section of the travel road 2 with reference to FIGs. 4A to 4C. FIGs. 4A to 4C each illustrate the image data of the front of the vehicle 100 that is captured by the vehicle exterior camera 11.

For example, in the present embodiment, in the section in which only the implicit sign is installed, the control unit 20 specifies the speed limit in an area beyond the implicit sign from the navigation information on the basis of the implicit sign identified from the image data of the vehicle exterior camera 11, and reads the implicit sign information from the sign data 22. When the vehicle 100 passes the implicit sign, the specified speed limit information and the implicit sign information are displayed in the display areas 33c, 33d of the display unit 30, respectively. Accordingly, in the section in which only the implicit sign is installed, the driver can check the speed limit and the passed sign information by the display areas 33c, 33d of the display unit 30.

The control unit 20 may specify the attribute of the location in the area beyond the implicit sign from the navigation information and the image data on the basis of the implicit sign identified from the image data of the vehicle exterior camera 11, and displays the speed limit information, which is estimated on the basis of the speed definition data 23, and the implicit sign information, which is read from the sign data 22, in the display areas 33c, 33d of the display unit 30, respectively, when the vehicle 100 passes the implicit sign. Accordingly, in the section in which only the implicit sign is installed, the driver can check the speed limit and the passed sign information by the display areas 33c, 33d of the display unit 30.

On the other hand, in the present embodiment, in the case where the plurality of the signs are detected from the camera image data in the section in which the plurality of the signs are installed, there is a possibility that the sign that is not the implicit sign is erroneously recognized as the implicit sign. Accordingly, the control unit 20 may calculates coordinate information of the sign detected from the image data of the vehicle exterior camera 11 with respect to the vehicle 100, and determine whether this sign is the implicit sign on the basis of the coordinate information thereof, the positional information of the vehicle 100, and the map information.

When the detected sign is the implicit sign, the control unit 20 specifies the speed limit information on the basis of the navigation information and/or the speed definition data 23, and reads the implicit sign information for each attribute of the location from the sign data 22. The control unit 20 can determine from the camera image data that the vehicle 100 has passed the implicit sign, and display the speed limit information and the implicit sign information in the display areas 33c, 33d of the display unit 30, respectively.

FIG. 4A illustrates the image data of the travel road on which only an implicit sign 4a is installed. The control unit 20 determines whether the sign identified from this image data is the implicit sign. The implicit sign is installed at the position at which the speed limit is switched, for example, the boundary between the outside and the inside of the urban area. Accordingly, in the navigation information, within a predetermined limit distance (for example, 50 m) in a travel direction before and after the position at which the speed limit is switched, the control unit 20 determines, as the implicit sign, the sign that exists closest to the switching position, and specifies the speed limit ahead of the implicit sign (the entrance to the urban area). The control unit 20 can calculate position coordinates of the sign 4a from the camera image data and the current position of the vehicle 100.

The control unit 20 specifies or estimates the speed restriction information on the basis of the navigation information, and reads the implicit sign information from the sign data 22. Accordingly, the control unit 20 can determine, from the camera image data, that the vehicle 100 has passed the implicit sign, and can display the speed limit information and the implicit sign information in the display areas 33c, 33d of the display unit 30, respectively. When a plurality of the signs exist within the predetermined limit distance from the position at which the speed limit is switched, it is possible to determine, as the implicit sign, the sign located closest to the position at which the speed limit is switched.

In the navigation information, within a predetermined limit distance (for example, 50 m) in the travel direction before and after a position at which the attribute of the location is switched, the control unit 20 may determine, as the implicit sign, the sign that exists closest to the switching position, and specify an area ahead of this implicit sign (the entrance to the urban area) as the urban area. The control unit 20 can calculate the position coordinates of the sign 4a from the camera image data and the current position of the vehicle 100.

Based on the attribute of this specified location, the control unit 20 specifies the corresponding speed limit information and implicit sign information e.g., from the speed definition data 23 and the sign data 22. In this case, the control unit 20 specifies the attribute of the location as the urban area, and specifies the corresponding speed limit information and implicit sign information from the speed definition data 23 and the sign data 22. Accordingly, the control unit 20 can determine, from the camera image data, that the vehicle 100 has passed the implicit sign, and can display the speed limit information and the implicit sign information in the display areas 33c, 33d of the display unit 30, respectively.

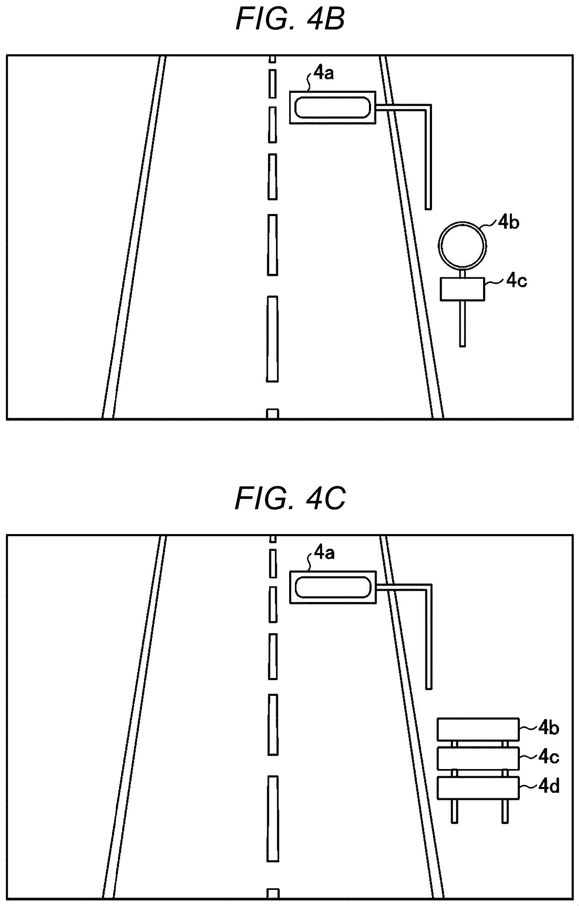

FIG. 4B illustrates image data of the travel road 2 on which, in addition to the implicit sign 4a, another sign 4b and an auxiliary sign 4c thereof are installed adjacently. The control unit 20 determines which of the signs identified from this camera image data is the implicit sign. The implicit sign is installed at the position at which the speed limit is switched, for example, the boundary between the outside and the inside of the urban area. Accordingly, the control unit 20 determines, as the implicit sign, the sign that exists at a position closest to the boundary position within the predetermined limit distance from the position at which the speed limit in the navigation information is switched.

However, since the sign 4b and the auxiliary sign 4c are close to the position of the implicit sign 4a, the sign 4b or the auxiliary sign 4c is possibly detected as the implicit sign erroneously. Accordingly, e.g., by calculating position coordinates of each of the sign 4b and the auxiliary sign 4c from the camera image data and the current position of the vehicle 100, the control unit 20 can exclude these signs from determination processing (that is, determines that the signs are not the implicit signs) when the position coordinates of these sign coincide with each other or when the position coordinates of these signs are adjacent to each other within a predetermined distance (for example, 1 m) in a perpendicular or horizontal direction with respect to the travel road.

Accordingly, as illustrated in FIG. 4B, when the sign 4b and the auxiliary sign 4c are arranged in the direction perpendicular to the travel road 2, it is determined that the position coordinates of each of the signs are adjacent to each other, and the control unit 20 can exclude the detected signs 4b, 4c from the determination processing of the implicit sign. As a result, it is possible to accurately determine the sign 4a, which is detected other than the excluded signs, as the implicit sign and to specify the speed limit ahead of this implicit sign (the entrance to the urban area).

The control unit 20 reads the speed restriction information and the implicit sign information specified e.g., from the navigation information and the sign data 22. The control unit 20 can determine, from the camera image data, that the vehicle 100 has passed the implicit sign, and can display the read speed limit information and implicit sign information in the display areas 33c, 33d of the display unit 30, respectively.

Within the predetermined limit distance from the position at which the attribute of the location in the navigation information is switched, the control unit 20 may determine, as the implicit sign, the sign that exists closest to the boundary position, and specifies the area ahead of this implicit sign as the urban area. In addition, a point that the adjacent signs within the predetermined distance, such as the sign 4b and the auxiliary sign 4c, are excluded from the determination processing is the same as the above embodiment. Furthermore, processing after the implicit sign is specified is the same as that in the other embodiment described above.

FIG. 4C illustrates the image data of the travel road 2 on which, in addition to the implicit sign 4a, the signs 4b, 4c, 4d are installed adjacently. The control unit 20 may determine which of the signs identified from this camera image data is the implicit sign.

The implicit sign is installed at the position at which the speed limit is switched, for example, the boundary between the outside and the inside of the urban area. Accordingly, the control unit 20 determines, as the implicit sign, the sign that is located at the position at which the speed limit in the navigation information is switched, that is, on the boundary or the position closest to the boundary within the predetermined limit distance.

However, since the signs 4b, 4c, 4d are close to the position of the implicit sign 4a, the control unit 20 may detect any or all of the signs 4b, 4c, 4d as the implicit signs when executing the determination processing on the basis of the navigation information and the camera image data. At this time, e.g., by calculating the position coordinates of each of the signs 4b, 4c, 4d from the camera image data and the current position of the vehicle 100, the control unit 20 can exclude these signs from the determination processing. Accordingly, as illustrated in FIG. 4C, when the signs 4b, 4c, 4d are adjacent within the predetermined distance, it is determined that these signs are not the implicit signs, and the control unit 20 can exclude the detected signs 4b, 4c, 4d from the determination processing of the implicit sign.

As a result, it is possible to accurately determine the sign 4a, which is detected other than the excluded signs, as the implicit sign and to specify the speed limit ahead of this implicit sign (the entrance to the urban area). The control unit 20 specifies the speed restriction information and the implicit sign information from the navigation information and the sign data 22. The control unit 20 can determine, from the camera image data, that the vehicle 100 has passed the implicit sign, and can display the corresponding speed limit information and implicit sign information in the display areas 33c, 33d of the display unit 30, respectively.

Within the predetermined limit distance from the position at which the attribute of the location in the navigation information is switched, the control unit 20 may determine, as the implicit sign, the sign that exists closest to the boundary position, and specify the area ahead of this implicit sign as the urban area. In addition, the point that the adjacent signs within the predetermined distance, such as the signs 4b, 4c, 4d, may be excluded from the determination processing is the same as the above embodiment. Furthermore, the processing after the implicit sign is specified is the same as that in the other embodiment described above.

Accordingly, in the situations of FIGs. 4A, 4B, and 4C, it is possible to determine whether the detected sign is the implicit sign on the basis of the navigation information and the information identified from the camera image data. In the situation where the plurality of signs are detected as in FIGs. 4B and 4C, there is a possibility that the display of the display areas 33c, 33d is switched by determining the sign that is not the implicit sign as the implicit sign and thus accurate information cannot be displayed to the driver at appropriate timing. Thus, in the present embodiment, it is configured that, when the sign is detected, the accurate information is displayed in the display areas 33c, 33d of the display unit 30 by accurately determining whether the detected sign is the implicit sign on the basis of the navigation information and the position coordinates of each of the signs.

### [Processing Flow]

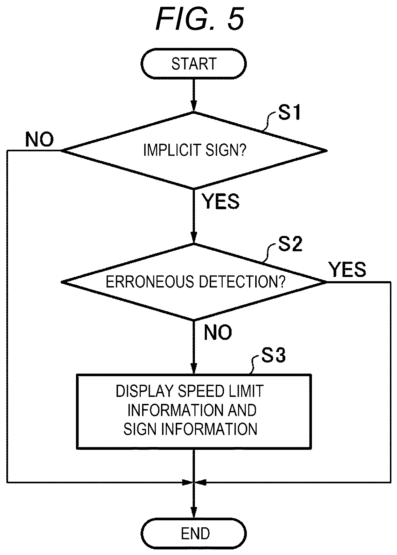

Next, a description will be made on a processing flow of the information display control system 1 according to the present embodiment with reference to FIG. 5. The control unit 20 may repeatedly execute this processing flow at all times.

When the processing is started, the control unit 20 subjects the image data acquired from the vehicle exterior camera 11 on the image processing, and determines whether the implicit sign is identified (S1). If the determination is negative (S1; No), the processing is terminated. The control unit 20 may constantly identify the sign from the image data by the image processing, and determines NO when determining that the identified sign corresponds to a normal traffic sign (for example, the speed restriction sign) or determining that the sign itself is not identified.

On the other hand, if the determination is positive (S1; Yes), the control unit 20 may determine whether one or more signs detected as the implicit signs are erroneous detection (S2). In the case where only one sign is detected as the implicit sign from the camera image data, and there is no other identified sign, it is determined whether the sign detected as the implicit sign exists within the predetermined limit distance from the boundary position at which the speed limit or the attribute of the location is switched on the basis of the image data and the navigation information by using the positional information of the boundary position at which the speed limit is switched, and then determines whether it is the erroneous detection.

If the sign detected as the implicit sign is not located within the predetermined limit distance from the boundary position (that is, the erroneous detection), the control unit 20 determines Yes (S2; Yes). If the determination is positive (S2; Yes), the processing is terminated. Switching of the speed limit corresponds to switching of the speed limit in the navigation information, but may be switching of the legal speed or the speed limit estimated from the speed definition data 23 due to the change of the attribute of the location.

In the determination processing of S2, in the case where the plurality of signs are identified as the implicit signs from the camera image data, the control unit 20 may acquire the position coordinates of each of the signs identified from the camera image data, and exclude the signs that are adjacent within the predetermined distance (for example, 1 m) from the determination processing.

Next, in regard to the signs that are not excluded, the control unit 20 determines whether the sign that is detected as the implicit sign exists within the predetermined limit distance (for example, 50 m) from the position at which the speed limit or the attribute of the location is switched by using the positional information of the position at which the speed limit in the navigation information or the attribute of the location is switched and the position coordinates of the sign, and then determines whether it is the erroneous detection. If the sign detected as the implicit sign is not located within the predetermined limit distance from the boundary position (that is, the erroneous detection), the control unit 20 determines Yes (S2; Yes). If the determination is positive (S2; Yes), the processing may be terminated.

If it is determined that the identified sign is not the erroneous detection (S2; No), the control unit 20 may determine the sign 4a closest to the boundary position as the implicit sign, and specifies the speed limit ahead of this implicit sign. The control unit 20 specifies the speed limit information on the basis of the navigation information or the speed definition data 23, and reads the implicit sign information from the sign data 22. Then, when determining, from the camera image data, that the vehicle 100 has passed the implicit sign, the control unit 20 displays the speed limit information and the implicit sign information on the display unit 30 (S3), and then terminates the processing.

### [Operation of Information Display Control System]

Next, a description will be made on the operation of the information display control system 1 according to the present embodiment of the invention.

The present embodiment is the information display control system 1 for the vehicle 100, and includes: the vehicle exterior camera 11 (the imaging unit) that acquires the image data acquired by imaging at least the front of the vehicle 100 (or acquires the image data of the footage in front of the vehicle 100); the navigation device 12 that acquires the positional information of the vehicle 100 and the map information; and the control unit 20 that identifies the sign from the acquired image data, identifies the speed limit information from the identified sign, and displays the identified speed limit information on the display unit 30. The map information includes the information on the attribute of the location and the information on the speed limit on the travel road. The control unit 20 is configured to execute the determination processing to determine whether the sign is the implicit sign of the attribute of the location on the basis of the positional information, the map information, and the image data when identifying the sign from the acquired image data and to display the speed limit information in regard to the location beyond the sign and the implicit sign information indicating the attribute of the location on the display unit 30 when the sign is the implicit sign of the attribute of the location. In the determination processing, the control unit 20 determines whether the sign exists near or at the position at which the speed limit is switched.

In the present embodiment configured as described above, when the sign is identified, the implicit sign can be identified without the erroneous detection on the basis of the map information, the sign information, and the image data, and it is possible to accurately provide the driver with the speed limit information in regard to the location beyond the sign and the implicit sign information indicating the attribute of the location.

In the present embodiment, for example, the control unit 20 determines that the sign is the implicit sign when the sign is located at the position within the predetermined limit distance from the position at which the speed limit is switched. In the present embodiment configured as described above, it is possible to determine whether the sign identified from the image data is the implicit sign on the basis of the distance from the boundary position.

In the present embodiment, for example, when the plurality of signs are identified, the control unit 20 determines that the sign located closest to the position at which the speed limit is switched is the implicit sign. In the present embodiment configured as described above, it is possible to determine whether the sign identified from the image data is the implicit sign on the basis of the distance from the boundary position.

In the present embodiment, for example, the position at which the speed limit is switched is the position at which the speed limit included in the map information is switched. In the present embodiment configured as described above, it is possible to accurately provide the driver with the speed limit information, which is based on the attribute of the location, and the implicit sign information indicating the attribute of the location when the vehicle 100 passes the implicit sign.

In the map information, the speed limit is defined in the manner to correspond to the attribute of the location of the travel road. In the present embodiment configured as described above, the speed limit can be acquired from the map information.

In the present embodiment, for example, the control unit 20 includes the speed definition data that defines the speed limit information in the manner to correspond to the attribute of the location. In the present embodiment configured as described above, it is possible to acquire the speed limit information from the speed definition data on the basis of the attribute of the location.

In the present embodiment, for example, the control unit 20 excludes the plurality of adjacent signs within the predetermined distance from the determination processing. In the present embodiment configured as described above, when the plurality of signs identified from the image data are adjacent to each other, these signs can be excluded.

In the present embodiment, for example, the control unit 20 acquires the position coordinates of the signs identified from the image data, and determines whether the plurality of signs are adjacent within the predetermined distance on the basis of the distance between two each of the position coordinates of the plurality of signs. In the present embodiment configured as described above, it is possible to accurately determine whether the plurality of signs are the implicit signs on the basis of the position coordinates thereof.

In the present embodiment, for example, the implicit sign includes at least one of a sign indicating an entrance to an urban area or an exit from the urban area, a sign indicating an entrance to a residential area or an exit from the residential area, and a sign indicating an entrance or an exit between a general road and an expressway. In the present embodiment configured as described above, the control unit 20 can identify the sign indicating the entrance to the urban area or the exit from the urban area, the sign indicating the entrance to the residential area or the exit from the residential area, and the sign indicating the entrance or the exit between the general road and the expressway.

### [Reference Signs List]

1: information display control system
2: travel road
3a: implicit sign
3b, 3c: speed restriction sign
4a: implicit sign
4b: sign
4c: auxiliary sign
4b, 4c, 4d: sign
10: vehicle sensor
20: control unit
22: sign data
23: speed definition data
30: display unit
31: vehicle speed display unit
33: sign display unit
33a, 33b, 33c, 33d: display area
100: vehicle

## Claims

1. An information display control system (1) for a vehicle (100), the information display control system (1) comprising:
an imaging unit (11) that is configured to acquire image data of at least front of the vehicle (100);
a navigation device (12) that is configured to acquire positional information of the vehicle (100) and map information; and
a control unit (20) that is configured to identify a sign (3a to 3c, 4a to 4d) from the acquired image data, identify speed limit information from the identified sign, and display the identified speed limit information on a display unit (30), wherein
the map information includes information on an attribute of a location and information on a speed limit on a travel road,
the control unit (20) is configured to execute determination processing to determine whether the sign is an implicit sign (3a, 4a) of the attribute of the location on the basis of the positional information, the map information, and the image data when identifying the sign (3a to 3c, 4a to 4d) from the acquired image data and to display the speed limit information in regard to a location beyond the sign (3a to 3c, 4a to 4d) and information indicating the attribute of the location on the display unit (30) when the sign (3a to 3c, 4a to 4d) is the implicit sign (3a, 4a) of the attribute of the location, and,
in the determination processing to determine whether the sign is the implicit sign (3a, 4a), the control unit (20) is configured to determine whether the sign (3a to 3c, 4a to 4d) exists near or at a position at which the speed limit is switched.

2. The information display control system (1) according to claim 1, wherein
the control unit (20) is configured to determine that the sign (3a to 3c, 4a to 4d) is the implicit sign (3a, 4a) when the sign (3a to 3c, 4a to 4d) is located at a position within a predetermined limit distance from the position at which the speed limit is switched.

3. The information display control system (1) according to claim 1 or 2, wherein
when a plurality of signs are identified, the control unit (20) is configured to determine that a sign located closest to the position at which the speed limit is switched is the implicit sign (3a, 4a).

4. The information display control system (1) according to any one of the preceding claims, wherein
the position at which the speed limit is switched is a position at which the speed limit included in the map information is switched.

5. The information display control system (1) according to any one of the preceding claims, wherein
in the map information, the speed limit is defined in a manner to correspond to an attribute of a location of the travel road.

6. The information display control system (1) according to any one of the preceding claims, wherein
the control unit (20) includes speed definition data that defines the speed limit information in a manner to correspond to the attribute of the location.

7. The information display control system (1) according to any one of the preceding claims, wherein
the control unit (20) is configured to exclude a plurality of adjacent signs within a predetermined distance from the determination processing.

8. The information display control system (1) according to any one of the preceding claims, wherein
the control unit (20) is configured to acquire position coordinates of the sign (3a to 3c, 4a to 4d) identified from the image data, and determine whether a plurality of signs are adjacent within a predetermined distance on the basis of a distance between two each of the position coordinates of the plurality of signs.

9. The information display control system (1) according to any one of the preceding claims, wherein
the implicit sign (3a, 4a) includes at least one of a sign indicating an entrance to an urban area or an exit from the urban area, a sign indicating an entrance to a residential area or an exit from the residential area, and a sign indicating an entrance or an exit between a general road and an expressway.

10. A method of displaying information, the method comprising:
acquiring image data of at least front of a vehicle (100);
acquiring positional information of the vehicle (100) and map information, wherein the map information includes information on an attribute of a location and information on a speed limit on a travel road;
identifying a sign (3a to 3c, 4a to 4d) from the acquired image data;
identifying speed limit information from the identified sign; and
displaying the identified speed limit information on a display unit (30), wherein
determination processing to determine whether the sign is an implicit sign (3a, 4a) of the attribute of the location on the basis of the positional information, the map information, and the image data is executed when identifying the sign (3a to 3c, 4a to 4d) from the acquired image data,
the speed limit information in regard to a location beyond the sign (3a to 3c, 4a to 4d) and information indicating the attribute of the location are displayed on the display unit (30) when the sign (3a to 3c, 4a to 4d) is the implicit sign (3a, 4a) of the attribute of the location, and,
in the determination processing to determine whether the sign is the implicit sign (3a, 4a), it is determined whether the sign (3a to 3c, 4a to 4d) exists near or at a position at which the speed limit is switched.

11. The method according to claim 10, wherein
it is determined that the sign (3a to 3c, 4a to 4d) is the implicit sign (3a, 4a) when the sign (3a to 3c, 4a to 4d) is located at a position within a predetermined limit distance from the position at which the speed limit is switched, and/or
when a plurality of signs are identified, it is determined that a sign located closest to the position at which the speed limit is switched is the implicit sign (3a, 4a).

12. The method according to claim 10 or 11, wherein
the position at which the speed limit is switched is a position at which the speed limit included in the map information is switched.

13. The method according to any one of claims 10 to 12, wherein
in the map information, the speed limit is defined in a manner to correspond to an attribute of a location of the travel road, and/or
the speed limit information is defined to correspond to the attribute of the location.

14. The method according to any one of claims 10 to 13,
wherein a plurality of adjacent signs within a predetermined distance are excluded from the determination processing, and/or
wherein position coordinates of the sign (3a to 3c, 4a to 4d) identified from the image data are acquired, and whether a plurality of signs are adjacent within a predetermined distance are determined on the basis of a distance between two each of position coordinates of the plurality of signs.

15. The method according to any one of claims 10 to 14, wherein
the implicit sign (3a, 4a) includes at least one of a sign indicating an entrance to an urban area or an exit from the urban area, a sign indicating an entrance to a residential area or an exit from the residential area, and a sign indicating an entrance or an exit between a general road and an expressway.
